# EUROPEAN PATENT APPLICATION

(11) **EP 4 242 589 A1**
(43) Date of publication of application: **13.09.2023**
(21) Application number: 23160047.9
(22) Date of filing: 03.03.2023
(51) Int. Cl.: G01C 21/00, G06F 16/22, G06F 16/29

(54) **NAVIGATION SYSTEM WITH ADDRESS INDEX MECHANISM AND METHOD OF OPERATION THEREOF**

(30) Priority: 07.03.2022 US 202217688058
(71) Applicant: TeleNav, Inc., Santa Clara, CA 95054 (US)
(72) Inventor: Wang, Liang, Santa Clara, CA, 95054 (US)
(74) Representative: Kretschmann, Dennis

(57) **Abstract**

A navigation system (100) includes: a control circuit (512) configured to: receive a map data update (121) including a selected point-of-interest (312); extract an administrative center (308) from the map data update (121); calculate a full latitude/longitude address (307) of a primary point-of-interest (304) by adding an offset value (306) to the administrative center (308); accumulate a shifted address (318) for each of a point-of-interest (303) between the primary point-of-interest (304) and a selected point-of-interest (312); calculate the full latitude/longitude address (307) of the selected point-of-interest (312) by combining a total of the shifted address (318) for each of the points-of-interest (303) between the primary point-of-interest (304) and the selected point-of-interest (312); a location circuit (520), coupled to the control circuit (512), configured to track a planned route (213) to the selected point-of-interest (312); and an interface circuit (518), coupled to the control circuit (512), configured to display the planned route (213) on a device (102).

## Description

### TECHNICAL FIELD

An embodiment of the present invention relates generally to a navigation system, and more particularly to a system with an address index mechanism.

### BACKGROUND ART

As more navigation information is required to quickly identify points-of-interest and routing, the size of the index for all of this information grows to an unwieldy amount. The result is that memory limited systems, such as in-vehicle navigation systems are restricted to the size of a region that they can support and they have insufficient memory to add new features or safety strategies. When the address index becomes very large the in-vehicle navigation system must request routing assistance from a navigation server and can be required to deliver a piece meal solution for routing and points-of-interest.

As the number of vehicles on the roads increases, increased interaction with the navigation server can cause response delays and heavy communication traffic between the in-vehicle navigation system and the navigation server. This condition can increase the probability of missed navigation instructions or queries that go without responses.

Thus, a need still remains for a navigation system to improve system performance with address index mechanism. In view of the ever-increasing commercial competitive pressures, along with growing consumer expectations and the diminishing opportunities for meaningful product differentiation in the marketplace, it is increasingly critical that answers be found to these problems. Additionally, the need to reduce costs, improve efficiencies and performance, and meet competitive pressures adds an even greater urgency to the critical necessity for finding answers to these problems.

Solutions to these problems have been long sought but prior developments have not taught or suggested any solutions and, thus, solutions to these problems have long eluded those skilled in the art.

### DISCLOSURE OF THE INVENTION

An embodiment of the present invention provides a method of operation of a navigation system including: receiving a map data update including a selected point-of-interest; extracting an administrative center from the map data update; calculating a full latitude/longitude address of a primary point-of-interest by adding an offset value to the administrative center; accumulating a shifted address for each of a point-of-interest between the primary point-of-interest and a selected point-of-interest; calculating the full latitude/longitude address of the selected point-of-interest by combining a total of the shifted address for each of the points-of-interest between the primary point-of-interest and the selected point-of-interest; tracking a planned route to the selected point-of-interest; and displaying the planned route on a device.

An embodiment of the present invention provides a navigation system, including a control circuit configured to: receive a map data update including a selected point-of-; extract an administrative center from the map data update; calculate a full latitude/longitude address of a primary point-of-interest by adding an offset value to the administrative center; accumulate a shifted address for each of a point-of-interest between the primary point-of-interest and a selected point-of-interest; calculate the full latitude/longitude address of the selected point-of-interest by combining a total of the shifted address for each of the points-of-interest between the primary point-of-interest and the selected point-of-interest; a location circuit, coupled to the control circuit, configured to track a planned route to the selected point-of-interest; and an interface circuit, coupled to the control circuit, configured to display the planned route on a device.

An embodiment of the present invention provides a non-transitory computer readable medium including instructions for a navigation system, including: receiving a map data update including a selected point-of-interest; extracting an administrative center from the map data update; calculating a full latitude/longitude address of a primary point-of-interest by adding an offset value to the administrative center; accumulating a shifted address for each of a point-of-interest between the primary point-of-interest and a selected point-of-interest; calculating the full latitude/longitude address of the selected point-of-interest by combining a total of the shifted address for each of the points-of-interest between the primary point-of-interest and the selected point-of-interest; tracking a planned route to the selected point-of-interest; and displaying the planned route on a device.

Certain embodiments of the invention have other steps or elements in addition to or in place of those mentioned above. The steps or elements will become apparent to those skilled in the art from a reading of the following detailed description when taken with reference to the accompanying drawings.

### BRIEF DESCRIPTION OF THE DRAWINGS

FIG. 1 is a block diagram of a navigation system with an address index mechanism in an embodiment of the present invention.
FIG. 2 is an example of a top view of a block diagram of a first device configured to provide the traffic state detection mechanism in an embodiment.
FIG. 3 is an exemplary schematic view of a region of interest processed by the navigation system.
FIG. 4 is an exemplary compression of the in-vehicle map database provided by the navigation system.
FIG. 5 is an exemplary block diagram of the navigation system in an embodiment.
FIG. 6 is exemplary control flow chart of the navigation system.
FIG. 7 is a flow chart of a method of operation of a navigation system in an embodiment of the present invention.

### BEST MODE FOR CARRYING OUT THE INVENTION

The following embodiments are described in sufficient detail to enable those skilled in the art to make and use the invention. It is to be understood that other embodiments would be evident based on the present disclosure, and that system, process, or mechanical changes may be made without departing from the scope of an embodiment of the present invention.

In the following description, numerous specific details are given to provide a thorough understanding of the invention. However, it will be apparent that the invention may be practiced without these specific details. In order to avoid obscuring an embodiment of the present invention, some well-known circuits, system configurations, and process steps are not disclosed in detail.

The drawings showing embodiments of the system are semi-diagrammatic, and not to scale and, particularly, some of the dimensions are for the clarity of presentation and are shown exaggerated in the drawing figures. Similarly, although the views in the drawings for ease of description generally show similar orientations, this depiction in the figures is arbitrary for the most part. Generally, the invention can be operated in any orientation. The embodiments of various components as a matter of descriptive convenience and are not intended to have any other significance or provide limitations for an embodiment of the present invention.

One skilled in the art would appreciate that the format with which navigation information is expressed is not critical to some embodiments of the invention. For example, in some embodiments, navigation information is presented in the format of (X, Y, Z); where X and Y and Z are three coordinates that define the geographic location, i.e., a position of a vehicle, street, or point-of-interest.

The term "module" referred to herein can include or be implemented as or include software running on specialized hardware, hardware, or a combination thereof in the present invention in accordance with the context in which the term is used. For example, the software can be machine code, firmware, embedded code, and application software. The software can also include a function, a call to a function, a code block, or a combination thereof.

Also, for example, the hardware can be gates, circuitry, processor, computer, integrated circuit, integrated circuit cores, memory devices, a pressure sensor, an inertial sensor, a microelectromechanical system (MEMS), passive devices, physical non-transitory memory medium including instructions for performing the software function, a portion therein, or a combination thereof to control one or more of the hardware units or circuits. Further, if a "unit" is written in the system claims section below, the "unit" is deemed to include hardware circuitry for the purposes and the scope of the system claims.

The units in the following description of the embodiments can be coupled or attached to one another as described or as shown. The coupling or attachment can be direct or indirect without or with intervening items between coupled or attached modules or units. The coupling or attachment can be by physical contact or by communication between modules or units, such as wireless communication.

It is also understood that the nouns or elements in the embodiments can be described as a singular instance. It is understood that the usage of singular is not limited to singular but the singular usage can be applicable to multiple instances for any particular noun or element in the application. The numerous instances can be the same or similar or can be different.

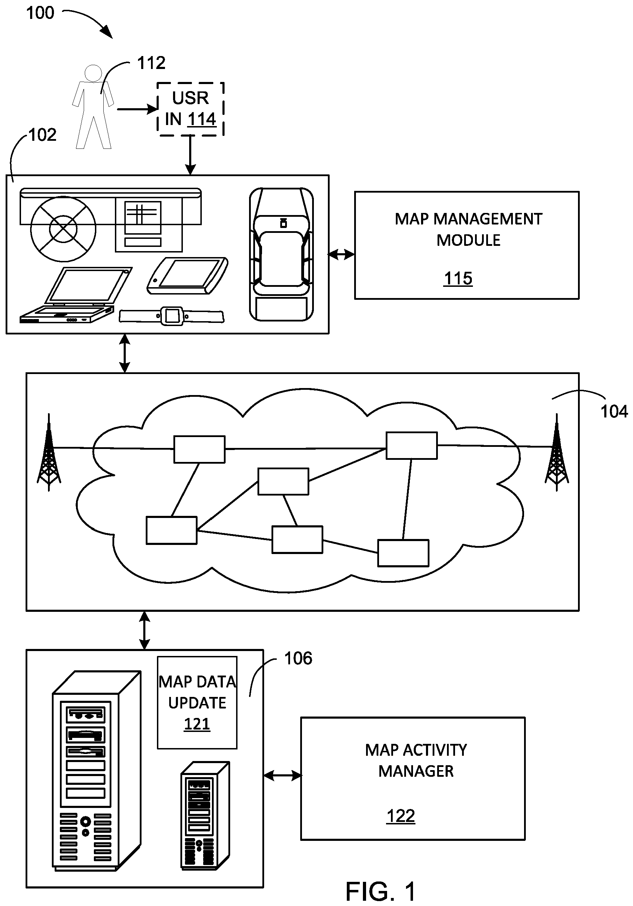

Referring now to FIG. 1, therein is shown a block diagram of a navigation system 100 with an address index mechanism in an embodiment of the present invention. The navigation system 100 can include a first device 102, such as a client or a server, connected to a second device 106, such as a client or server.

The navigation system 100 can include a system for identifying points-of-interest in a specific area. The navigation system 100 can access pertinent information on points-of-interest specified through a user input 114 for supporting a planned route defined by a user 112, the navigation system 100, another system or software, or a combination thereof. The first device 102 can communicate with the second device 106 through a network 104, such as a wireless or wired network.

For example, the first device 102 can be of any of a variety of computing devices, such as a cellular phone, personal digital assistant, a notebook computer, a wearable device, internet of things (IoT) device, automotive telematics navigation system, or other multi-functional device. Also, for example, the first device 102 can include a device or a sub-system, an autonomous or self-maneuvering vehicle or object, a driver assisted vehicle, a remote-controlled vehicle or object, or a combination thereof.

The first device 102 can couple, either directly or indirectly, to the network 104 to communicate with the second device 106 or can be a stand-alone device. The first device 102 can further be separate form or incorporated with a vehicle, such as a car, truck, bus, or motorcycle.

For illustrative purposes, the navigation system 100 is described with the first device 102 as a mobile computing device, although it is understood that the first device 102 can be different types of devices. For example, the first device 102 can also be a non-mobile computing device, such as a server, a server farm, or a desktop computer.

The second device 106 can be any of a variety of centralized or decentralized computing devices. For example, the second device 106 can be a computer, grid computing resources, a virtualized computer resource, cloud computing resource, routers, switches, peer-to-peer distributed computing devices, or a combination thereof.

The second device 106 can be centralized in a single room, distributed across different rooms, distributed across different geographical locations, embedded within a telecommunications network. The second device 106 can couple with the network 104 to communicate with the first device 102. The second device 106 can also be a client type device as described for the first device 102.

For illustrative purposes, the navigation system 100 is described with the second device 106 as a non-mobile computing device, although it is understood that the second device 106 can be different types of computing devices. For example, the second device 106 can also be a mobile computing device, such as notebook computer, another client device, a wearable device, or a different type of client device.

Also, for illustrative purposes, the navigation system 100 is described with the second device 106 as a computing device, although it is understood that the second device 106 can be different types of devices. Also, for illustrative purposes, the navigation system 100 is shown with the second device 106 and the first device 102 as endpoints of the network 104, although it is understood that the navigation system 100 can include a different partition between the first device 102, the second device 106, and the network 104. For example, the first device 102, the second device 106, or a combination thereof can also function as part of the network 104.

The network 104 can span and represent a variety of networks. For example, the network 104 can include wireless communication, wired communication, optical, ultrasonic, or the combination thereof. Satellite communication, cellular communication, Bluetooth, Infrared Data Association standard (IrDA), wireless fidelity (WiFi), and worldwide interoperability for microwave access (WiMAX) are examples of wireless communication that can be included in the communication path. Ethernet, digital subscriber line (DSL), fiber to the home (FTTH), and plain old telephone service (POTS) are examples of wired communication that can be included in the network 104. Further, the network 104 can traverse a number of network topologies and distances. For example, the network 104 can include direct connection, personal area network (PAN), local area network (LAN), metropolitan area network (MAN), wide area network (WAN), or a combination thereof.

The first device 102 can be coupled to a map management module 115, such as map database expansion module that can be implemented in software running on hardware, full hardware, or a combination thereof configured to extract route and point-of-interest information for a planned route of the first device 102. As an example, the map management module 115 can include volatile memory, non-volatile memory, or a combination thereof. Also for example, the map management module 115 can also be implemented with circuits, logic, or devices, such as a processor, a microprocessor, an embedded processor, a math coprocessor, a multi-processor array, or a combination thereof.

The map management module 115 can generate information about a specific point-of-interest. The map management module 115 can be implemented by software, hardware, or a combination thereof capable of performing information look-up of additional information related to the street names, geometry, addresses, and information about the point-of-interest identified by the user 112, the navigation system 100, or a combination thereof.

The navigation system 100 can be operated by a user 112. The user 112 can include a person, an entity accessing or utilizing the navigation system 100, a software, a device, or a combination thereof. For example, the user 112 can include a person owning or operating the first device 102, a service, or a combination thereof. Also, for example, the user 112 can access or utilize the second device 106 through the first device 102, a service, or a combination thereof.

The navigation system 100 can further process the user input 114 from the user 112. For example, the user input 114 can include a request for navigation assistance, location of a point of interest, parking assistance, restaurant assistance, lodging assistance, location of gas stations, event reservations, or a combination thereof. The user input 114 can be provided by or from the user 112 directly to or directly on the first device 102. The user input 114 can include the input or the stimulus directly for or related to corresponding software, application, feature, or a combination thereof.

The navigation system 100 can implement one or more embodiments without the user input 114. The user input 114 can include command prompts, including an increase in speed, a decrease in speed, a change of position within a lane, or changing lanes as prompted by the user 112 in control of the first device 102.

The second device 106 can send a map data update 121 periodically to the first device 102 or when the first device 102 is requesting service for route planning or identification or points-of-interest along the current roadway. The second device 106 can distribute the map data update 121 to other users approaching the location identified by the map data update 121 sent to the first device 102.

It has been discovered that the navigation system 100 can minimize the size of the map data update 121, by implementing the administrative center of the region of interest, in order to shorten the time required to transfer the map data update 121. The map data update 121 can be reduced in size of the memory required by the navigation system 100 and can increase the number of records maintained in a memory constrained environment of the first device 102. The increase in the number of records in the map management module 115 can enhance the safety of the user 112 and improve the function of the navigation system 100 by providing additional service information, such as repair facilities, hospital information, auto service facilities, and the like.

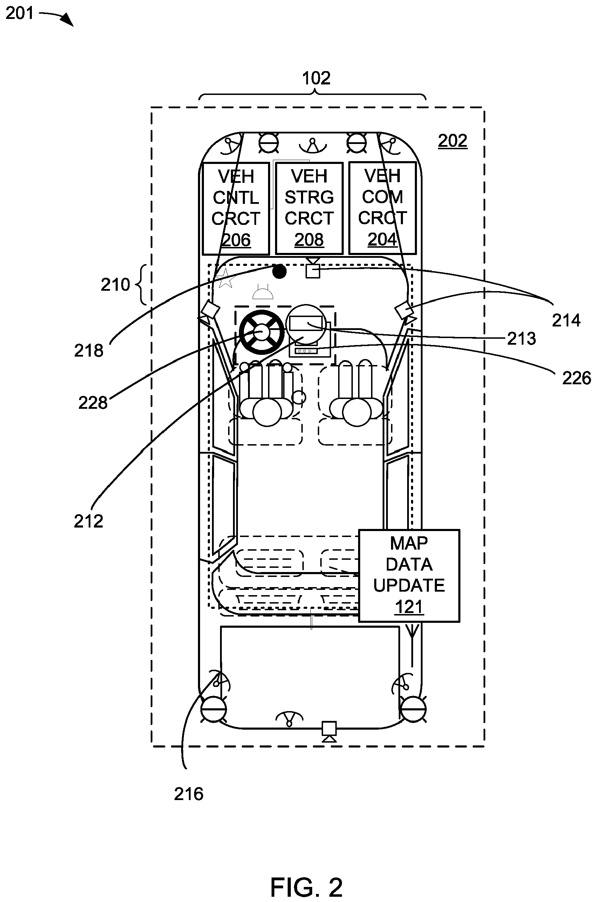

Referring now to FIG. 2, therein is shown an example a top plan view illustration 201 of a region of interest 202 for the navigation system 100 of FIG. 1. The navigation system 100 can include or interact with the first device 102 in the region of interest 202. By way of an example, the region of interest 202 is shown as a rectangle around the first device 102, but the region of interest 202 can be of any shape and size. It will be understood that the region of interest 202 can encompass several square miles of area, but for ease of illustration the region of interest 202 is shown to surround the first device 102.

The first device 102 can be an object or a machine used for transporting people or goods capable of automatically maneuvering or operating the object or the machine. The first device 102 can include the vehicle accessible by the user 112 of FIG. 1 for control, maneuver, operation, or a combination thereof. For example, the first device 102 can include a car, a truck, a cart, a drone, or a combination thereof.

The first device 102 can further be controlled or maneuvered without the direct user input 114 of FIG. 1 corresponding to the maneuver or the movement. For example, the first device 102 can include a self-driving vehicle, or a vehicle with automatic maneuvering features, such as smart cruise control, parallel parking feature, or preventative breaking. The first device 102 can include a smart cruise control feature, capable of setting and adjusting the travel speed of the first device 102 without the user input 114. Also, for example, the first device 102 can be controlled or maneuvered by the navigation system 100, including the navigation system 100 controlling or setting a cruising speed, lane position, or other physical maneuvers or movements of the first device 102 within the region of interest 202.

The map data update 121 of FIG. 1 can include information regarding the region of interest 202 accessed by the first device 102. The map data update 121 can contain new information that was not previously available for the region of interest 202 travelled by the first device 102.

The map data update 121 can further include information describing or representing details of points-of-interest within the region of interest 202. For example, the map data update 121 can include speed data, navigation data, street/address data, business descriptions, or a combination thereof.

The first device 102 or other vehicles interfacing with the navigation system 100 can include a device, a circuit, one or more specific sensors, such as environmental sensors 210, or a combination thereof for providing assistance or additional information to the user 112 controlling, maneuvering, or operating the first device 102. The first device 102 or any other vehicles can include a vehicle communication circuit 204, a vehicle control circuit 206, a vehicle storage circuit 208, other interfaces, or a combination thereof.

The vehicle storage circuit 208 can include a functional unit or circuit integral to the corresponding first device 102 and configured to store and recall information. The vehicle storage circuit 208 can be a volatile memory, a nonvolatile memory, an internal memory, an external memory, or a combination thereof. For example, the vehicle storage circuit 208 can be a nonvolatile storage such as non-volatile random access memory (NVRAM), Flash memory, disk storage, or a volatile storage such as static random access memory (SRAM). The vehicle storage circuit 208 can maintain the navigation data, which can be constrained by the capacity of the vehicle storage circuit 208.

The vehicle storage circuit 208 can store vehicle software, other relevant data, such as input information, information from sensors, diagnostic data, processing results, information predetermined or preloaded by the navigation system 100 or vehicle manufacturer, or a combination thereof. The sharing of the capacity of the vehicle storage circuit 208, with the vehicle control circuit 206 and the vehicle communication circuit 204, can cause the memory restrictions that limit the capacity of the navigation data.

The vehicle control circuit 206 can include a function unit or circuit integral to the first device 102 and configured to execute or implement instructions. The vehicle control circuit 206 can execute or implement the vehicle software to provide the intelligence of the corresponding vehicle, the navigation system 100, or a combination thereof.

The vehicle control circuit 206 can be implemented in a number of different manners. For example, the vehicle control circuit 206 can be a processor, an application specific integrated circuit (ASIC) an embedded processor, a microprocessor, a hardware control logic, a hardware finite state machine (FSM), a digital signal processor (DSP), or a combination thereof. As a more specific example, the vehicle control circuit 206 can include an engine control unit, one or more central processing unit, or a combination thereof

The vehicle communication circuit 204 can include a function unit or circuit integral to the corresponding vehicle, such as the first device 102, another vehicle, or a combination thereof. The vehicle communication circuit 204 can be configured to enable external communication to and from the corresponding vehicle. For example, the vehicle communication circuit 204 can permit the first device 102 to communicate with the second device 106 of FIG. 1.

The vehicle communication circuit 204 can also function as a communication hub allowing the corresponding control vehicle to function as part of the network 104 of FIG. 1 and not limited to be an end point or terminal circuit to the network 104. The vehicle communication circuit 204 can include active and passive components, such as microelectronics or an antenna, for interaction with the network 104. For example, the vehicle communication circuit 204 can include a modem, a transmitter, a receiver, a port, a connector, or a combination thereof for wired communication, wireless communication, or a combination thereof.

The vehicle communication circuit 204 can couple with the network 104 to send or receive information directly between the vehicle communication circuit 204 and the second device 106 as end points of the communication, such as for direct line-of-sight communication or peer-to-peer communication. The vehicle communication circuit 204 can further couple with the network 104 to send or receive information through a server or another intermediate device in between endpoints of the communication. The vehicle communication circuit 204 can access the vehicle storage circuit 208 for storing and retrieving information, such as the map data update 121, transferred through the network 104.

The first device 102 or other vehicles can further include various interfaces. The first device 102 can include one or more interfaces for interaction or internal communication between functional units or circuits of the first device 102. For example, the first device 102 can include one or more interfaces, such as drivers, firmware, wire connections or buses, protocols, or a combination thereof, for the vehicle storage circuit 208, the vehicle control circuit 206, or a combination thereof.

The first device 102 or the other vehicles can further include one or more interfaces for interaction with an occupant, an operator or a driver, a passenger, or a combination thereof relative to the corresponding vehicle. For example, the first device 102 or the other vehicles can include a user interface 212 including input or output devices or circuits, such as a screen or touch screen, a speaker, a microphone, a keyboard or other input devices, an instrument panel, or a combination thereof. The user interface 212 can display a planned route 213 provided by the navigation system 100. The planned route 213 can be a path including turns and traffic details to proceed from a current location to a desired destination.

The first device 102 can further include one or more interfaces along with switches or actuators for physically controlling movable components of the first device 102. For example, the first device 102 can include the one or more interfaces along with the controlling mechanisms to physically perform and control the maneuvering of the first device 102, such as for automatic driving, smart cruise control, or maneuvering features.

The functional units or circuits in the first device 102 can work individually and independently of the other functional units or circuits. The first device 102 can work individually and independently from the network 104, the second device 106, other devices or vehicles, or a combination thereof.

The functional units or circuits described above can be implemented in hardware. For example, one or more of the functional units or circuits can be implemented using a gate, circuitry, a processor, a computer, integrated circuit, integrated circuit cores, a pressure sensor, an inertial sensor, a microelectromechanical system (MEMS), a passive device, a physical non-transitory memory medium containing instructions for performing the software function, a portion therein, or a combination thereof.

The environmental sensors 210 are each a device or a circuit for detecting or identifying environment of the corresponding vehicle. The environmental sensors 210 can detect, identify, determine, or a combination thereof, such as for status, surroundings or movement for the corresponding vehicle. The environmental sensors 210 can detect, identify, determine, or a combination thereof for environment within a cabin of the corresponding vehicle, an environment external to and surrounding the corresponding vehicle, or a combination thereof. The environmental sensors 210 can be implement for the first device 102.

For example, the environmental sensors 210 can include a user interface 212, an optical sensor 214, a radar sensor 216, a location-movement sensor 218, or a combination thereof. The user interface 212 can include a projector, a video screen, a touch screen, a speaker, or any combination thereof.

The optical sensor 214 can include a sensor for detecting or determining visual information representing the environment external to and surrounding of the corresponding vehicle. The optical sensor 214 can include a camera attached to or integral with the corresponding vehicle or device. For example, the optical sensor 214 can include a camera, such as forward facing camera, a video camera, a rear-view or back-up camera, a side-view or a blind-spot camera, or a combination thereof. Also, for example, the optical sensor 214 can include an infrared sensor, a night vision video camera, or a night vision sensor.

The optical sensor 214 can further include a camera on the first device 102 or another user device of the user 112 connected to and interacting with a vehicle. The optical sensor 214 can further include a cabin camera for detecting or determining visual information inside the vehicle or cabin of the vehicle.

The radar sensor 216 can include an object-detection system, device, or circuit. The radar sensor 216 can determine or identify an existence of an object or a target, such as an obstacle or another vehicle, external to the corresponding device or vehicle, a relative location or a distance between the object or the target and the corresponding device or vehicle, or a combination thereof.

The radar sensor 216 can utilize radio waves to determine or identify an existence of the object or the target, the relative location or a distance relative to the first device 102 or other corresponding device or vehicle, or a combination thereof. For example, the radar sensor 216 can include a proximity sensor or warning system, such as for an area in front of, behind, adjacent to or on a side of, or a combination thereof geographically or physically relative to the first device 102.

The location-movement sensor 218 can be a sensor for identifying or calculating a geographic location of the corresponding vehicle or device, determining a movement or speed of the corresponding vehicle or device, or a combination thereof. The location-movement sensor 218 can include an accelerometer, a speedometer, a Global Positioning System (GPS) receiver or device, a gyroscope or a compass, or a combination thereof. The first device 102 can include the environmental sensors 210 other than or in addition to the location-movement sensor 218. The location-movement sensor 218 can provide a gyroscope rate of change for monitoring turns and a speed from the speedometer.

As a more specific example, the vehicle communication circuit 204, the vehicle control circuit 206, the vehicle storage circuit 208, the optical sensors 214, one or more interfaces, or a combination thereof can be included in or make up the first device 102.

The navigation system 100 can provide the vehicle movement control 228 as a suggestion to the user 112 for maneuvering or operating the first device 102. The navigation system 100 can process and generate vehicle movement control 228 for controlling or maneuvering the first device 102. The vehicle movement control 228 is an instruction, a signal, a process, a method, a mechanism, or a combination thereof for directing or controlling physical movement or travel of the first device 102.

The navigation system 100 can communicate the map data update 121 to the first device 102 from the second device 106 on intervals, such as one minute intervals. As the movement of the first device 102 slows or decreases. the interval can extend to make sure the first device has the most current information provided by the map data update 121. For an illustrative example, the navigation system 100 supports the second device 106 conveying the map data update 121 for the first device 102 to other vehicles near or planning to enter the region of interest 202 reported by the first device 102.

Continuing with the example, the navigation system 100 can communicate the map data update 121 from the second device 106 to other devices or vehicles, or directly communicate to the other devices or vehicles, such as for a peer-to-peer communication system. The navigation system 100 can communicate the map data update 121 without informing other devices or vehicles of the location or status of the first device 102 itself, about other vehicles detected and identified around the first device 102, or a combination thereof.

As a more specific example, the navigation system 100 can use the navigation data to generate the vehicle movement control 228, such as for steering, braking, setting or adjusting travel speed, accessary control, or a combination thereof. Details regarding the processing of the vehicle movement control 228 are discussed below.

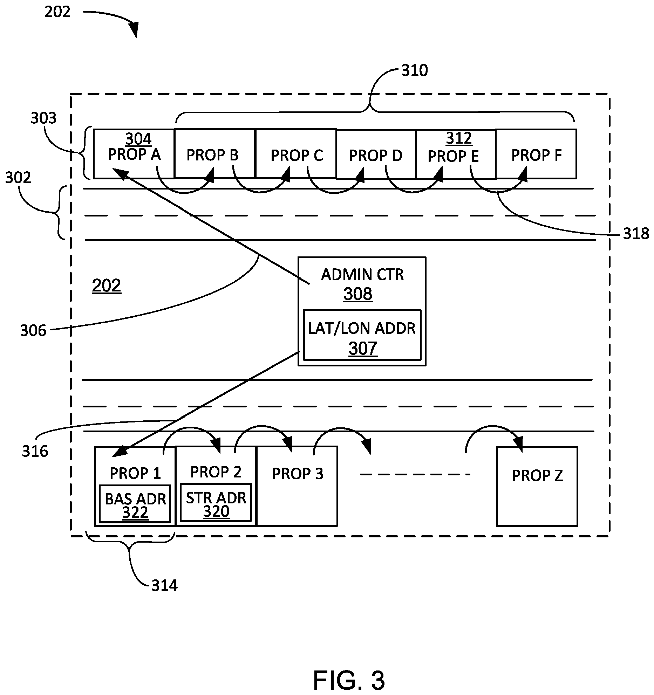

Referring now to FIG. 3, therein is shown an exemplary overhead view of a region of interest 202 as processed by the navigation system 100. The region of interest 202 can include traffic lanes 302 traversing the region of interest 202. The traffic lanes 302 can be roads, highways, courts, or thoroughfares used to traverse the region of interest 202. Points-of-interest 303 can be located along the traffic lanes throughout the region of interest 202. A first primary point-of-interest 304 can be located by applying a first offset value 306 to an administrative center 308 of the region of interest 202. The first primary point-of-interest 304 can be a retail outlet, restaurant, service center, museum, or the like that is positioned at an initial position 309 on the traffic lane 302.

The first offset value 306 is defined as the difference between the full latitude/longitude address 307 of the administrative center 308 and the full latitude/longitude address 307 of the first primary point-of-interest 304 as represented by a pair of two byte binary values (two bytes for latitude and two bytes for longitude). The full latitude/longitude address 307 is defined by the latitude and longitude as a global position of point-of-interest referenced and can be stored in the vehicle storage circuit 208 of FIG. 2 as an 18 byte number of fixed format. The administrative center 308 can be a point-of-interest located at the geographical center of the region of interest 202. The administrative center 308 can be any type of a facility that represents the geographical center of the region of interest 202. The initial position 309 can be a specific location related to an intersection of the traffic lanes 302, a boundary of the region of interest 202, a key feature of the region of interest 202, or the like. The capacity used within the vehicle storage circuit 208 can be reduced in size by not providing the full latitude/longitude address 307 for the first primary point-of-interest 304.

By way of an example, the full latitude/longitude address 307 of the administrative center 308 can consume 18 bytes in the vehicle storage circuit 208. Utilizing the first offset value 306 and the full latitude/longitude address 307 of the administrative center 308 to calculate the first primary point-of-interest 304, includes adding the four byte value (two bytes for latitude and two bytes for longitude) to the full latitude/longitude address 307 of the administrative center 308. The first offset value 306 and the full latitude/longitude address 307 of the administrative center 308 for a total of 22 bytes. In previous versions of the navigation system 100, the full latitude/longitude address 307 of the administrative center 308 and the full latitude/longitude address 307 of the first primary point-of-interest 304 would consume 36 bytes in the vehicle storage circuit 208.

By way of a further example, the first primary point-of-interest 304 can be adjacent to the traffic lanes 302. A group of secondary points-of-interest 310 can have a relative position to the first primary point-of-interest 304 along the same one of the traffic lanes 302. The vehicle storage circuit 208 can store a two byte value indicating the change in the full latitude/longitude address 307 from the first primary point-of-interest 304 or the adjacent one of the secondary points-of-interest 310. The values can be extracted from the vehicle storage circuit 208 by the map management module 115, including the administrative center 308 of the region of interest 202. Each of the secondary points-of-interest 310 can be a retail outlet, restaurant, service center, museum, or the like that is positioned along the traffic lanes 302 and positioned relative to the first primary point-of-interest 304.

Continuing the example, the user 112 of FIG. 1 of the navigation system 100 can request routing or other information about a selected point-of-interest 312. The selected point-of-interest 312 can be any of the first primary point-of-interest 304 through an M^{th} primary point-of-interest 314 or any of the secondary points-of-interest 310 that is chosen by the user 112. The M* primary point-of-interest 314 can be located by applying an M^{th} offset value 316 to the administrative center 308 of the region of interest 202. The M^{th} offset value 316 is defined in the same configuration as the first offset value 306, including the difference between the full latitude/longitude address 307 of the administrative center 308 and the full latitude/longitude address 307 of the M* primary point-of-interest 314 as represented by a pair of two byte binary values (two bytes for latitude and two bytes for longitude).

It is understood that there can be any number of the primary points-of-interest between the first primary point-of-interest 304 and the M* primary point-of-interest 314. As well, there can be the secondary points-of-interest 310 associated with each of the primary points-of-interest in the region of interest 202. In the example above, the user can identify the selected point-of-interest 312, shown as PROP E in FIG. 3. The navigation system 100 can calculate the full latitude/longitude address 307 of the selected point-of-interest 312 by starting with the full latitude/longitude address 307 of the administrative center 308, adding the first offset value 306, in order to identify the full latitude/longitude address 307 of the first primary point-of-interest 304. Then a shifted address 318 can be added for each of the secondary points-of-interest 310 from the first primary point-of-interest 304 to the selected point-of-interest 312. This process yields the full latitude/longitude address 307 of the selected point-of-interest 312. The shifted address 318 can be defined as the difference, represented as a binary number, between the full latitude/longitude address 307 of two adjacent ones of the points-of-interest 303.

It is understood that a street address 320 can be managed in the same manner as the geographical location in the region of interest 202. By assigning a base address 322 and utilizing the shifted address 318 to indicate the increment in the street address 320, less space can be consumed in the vehicle storage circuit 208. By way of an example the base address 322 can be 15500, which can represent a five byte field in the vehicle storage circuit 208. The adjacent one of the points-of-interest 303 can have the street address 320 of 15518, which can be represented by a single byte containing a binary 18 as the shifted address 318. The resulting reduction in the vehicle storage circuit 208 can represent four bytes per physical address on the traffic lanes 302. In the above example, the result is an 80% reduction in the memory capacity required in the vehicle storage circuit 208.

It has been discovered that a significant reduction in the consumption of the vehicle storage circuit 208 can be achieved by applying the first offset value 306, including the difference between the full latitude/longitude address 307 of the administrative center 308 and the full latitude/longitude address 307 of the first primary point-of-interest 304. Historically 50% of the vehicle storage circuit 208 was consumed by the full latitude/longitude address 307 for each of the points-of-interest 303. Based on the use of the calculations made possible by the first offset value 306 and the shifted address 318, the utilization of the vehicle storage circuit 208 can be reduced by 39%. This can be calculated by 4 bytes used divided by 18 bytes allocated is equal to 22% utilized or 78% saved space times 50% for the location information equals 39% memory space saved in the vehicle storage circuit 208. The additional memory in the vehicle storage circuit 208 can be used to improve safety or services information in the map management module 115 of FIG. 1.

It has further been discovered that as the number of vehicles on the roads increases, increased interaction with the second device 106, such as a navigation server, can cause response delays and heavy communication traffic between the first device 102 and the second device 106. Since the first device 102 must share memory space with other functions in the vehicle operating system, the size of the address index can be reduced by the navigation system 100. This approach can provide backward compatibility for older systems that are restricted in memory size.

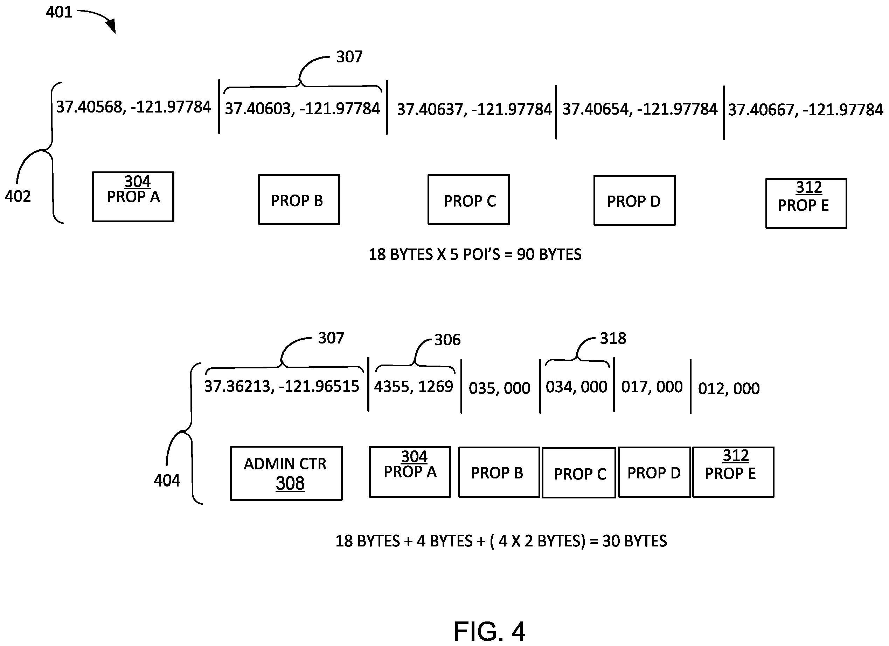

Referring now to FIG. 4, therein is shown an exemplary compression of the mapping data 401 provided by the navigation system 100. The exemplary compression 401 of the mapping data 401 depicts a legacy list 402 of the points-of-interest 303 of FIG. 3. The exemplary compression 401 represents a method of reducing the size of the legacy list 402 by replacing the full latitude/longitude address 307 for each of the points-of-interest with a shorter directional offset from the administrative center 308 or from the first primary point-of-interest 304. The legacy list 402 depicts the full latitude/longitude address 307 for each of the points-of-interest 303 from the first primary point-of-interest 304 to the selected point-of-interest 312. In this example, the full latitude/longitude address 307 for each of the five points-of-interest 303 consumes 5X18 Bytes = 90 Bytes.

An embodiment of the current invention can provide a compressed list 404 including the full latitude/longitude address 307 of the administrative center 308, the first primary offset 306, and the shifted address 318 for four of the points-of-interest 303 from first primary point-of-interest 304 to the selected point-of-interest 312. In the example given above, the administrative center 308 consumes 18 bytes. The first primary offset 306 consumes four bytes, and the remaining four of the points-of-interest 303 consume 2 bytes each. continuing the example, the total bytes consumed in this embodiment would be 18 bytes + four bytes + (4 X two bytes) = 30 bytes. As compared to the legacy list 402, the compressed list 404 represents a three-to-one reduction in the amount of the memory used in the mapping data 401.

It has been discovered that the navigation system 100 of the current invention can significantly reduce the consumption of the mapping data 401. By shifting the points-of-interest 303 based on the administrative center 308, the memory capacity of the mapping data 401 can be significantly reduced. The reduced size of the mapping data 401 allows implementation of additional safety and services features that otherwise would not fit in the map management module 115 of FIG. 1.

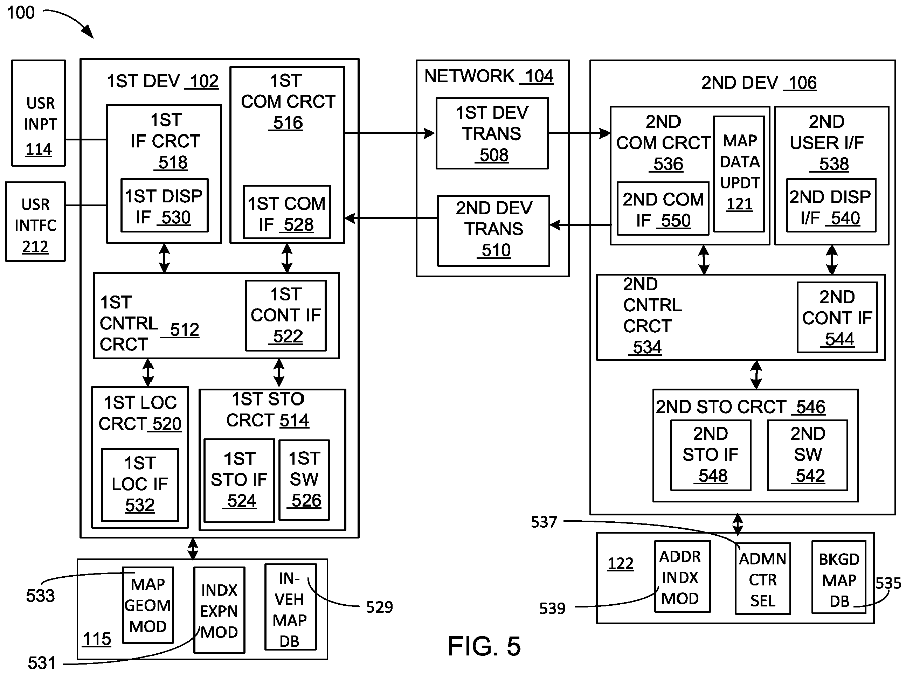

Referring now to FIG. 5, therein is shown an exemplary block diagram of the navigation system 100 in an embodiment. The navigation system 100 can include the first device 102, the network 104, and the second device 106. The first device 102 can send information in a first device transmission 508 over the network 104 to the second device 106. The second device 106 can send information in a second device transmission 510 over the network 104 to the first device 102 or the other vehicles 320 of FIG. 3.

For illustrative purposes, the navigation system 100 is shown with the first device 102 as a client device, although it is understood that the navigation system 100 can include the first device 102 as a different type of device. For example, the first device 102 can be a server containing the first display interface 530 coupled to the user interface 212.

Also, for illustrative purposes, the navigation system 100 is shown with the second device 106 as a server, although it is understood that the navigation system 100 can include the second device 106 as a different type of device. For example, the second device 106 can be a client device. By way of an example, the navigation system 100 can be implemented entirely on the first device 102. The second device 106 can provide training and enhancement of an in-vehicle map database 529, stored in the first device 102, by the map data update 121.

Also, for illustrative purposes, the navigation system 100 is shown with interaction between the first device 102 and the second device 106. However, it is understood that the first device 102 can be a part of or the entirety of an autonomous vehicle, a smart vehicle, or a combination thereof. Similarly, the second device 106 can similarly interact with the first device 102 representing the autonomous vehicle, the intelligent vehicle, or a combination thereof.

For brevity of description in this embodiment of the present invention, the first device 102 will be described as a client device and the second device 106 will be described as a server device. The embodiment of the present invention is not limited to this selection for the type of devices. The selection is an example of an embodiment of the present invention.

The first device 102 can include a first control circuit 512, a first storage circuit 514, a first communication circuit 516, a first interface circuit 518, and a first location circuit 520. The first control circuit 512 can include a first control interface 522. The first control circuit 512 can execute a first software 526 to provide the intelligence of the navigation system 100.

The first control circuit 512 can be implemented in a number of different manners. For example, the first control circuit 512 can be a processor, an application specific integrated circuit (ASIC) an embedded processor, a microprocessor, a hardware control logic, a hardware finite state machine (FSM), a digital signal processor (DSP), or a combination thereof. The first control interface 522 can be used for communication between the first control circuit 512 and other functional units or circuits in the first device 102. The first control interface 522 can also be used for communication that is external to the first device 102.

The first control interface 522 can receive information from the other functional units/circuits or from external sources, or can transmit information to the other functional units/circuits or to external destinations. The external sources and the external destinations refer to sources and destinations external to the first device 102.

The first control interface 522 can be implemented in different ways and can include different implementations depending on which functional units/circuits or external units/circuits are being interfaced with the first control interface 522. For example, the first control interface 522 can be implemented with a pressure sensor, an inertial sensor, a microelectromechanical system

(MEMS), optical circuitry, waveguides, wireless circuitry, wireline circuitry, or a combination thereof.

The first storage circuit 514 can store the first software 526. The first storage circuit 514 can also store the relevant information, such as data representing incoming images, data representing previously presented image, sound files, or a combination thereof. The first storage circuit 514 can also store the in-vehicle map database 529. Due to the fixed size of the first storage circuit 514, the in-vehicle map database 529 can be memory constrained and its size can have a critical impact of the function of the first device 102.

The first storage circuit 514 can be a volatile memory, a nonvolatile memory, an internal memory, an external memory, or a combination thereof. For example, the first storage circuit 514 can be a nonvolatile storage such as non-volatile random-access memory (NVRAM), Flash memory, disk storage, or a volatile storage such as static random-access memory (SRAM).

The first storage circuit 514 can include a first storage interface 524. The first storage interface 524 can be used for communication between the first storage circuit 514 and other functional units or circuits in the first device 102, such as the map data update 121 applied to the in-vehicle map database 529. The first storage interface 524 can also be used for communication that is external to the first device 102.

The first storage interface 524 can receive information from the other functional units/circuits or from external sources, or can transmit information to the other functional units/circuits or to external destinations. The external sources and the external destinations refer to sources and destinations external to the first device 102. The first storage interface 524 can receive input from and source data to the map management module 115.

The first storage interface 524 can include different implementations depending on which functional units/circuits or external units/circuits are being interfaced with the first storage circuit 514. The first storage interface 524 can be implemented with technologies and techniques similar to the implementation of the first control interface 522.

The first communication circuit 516 can enable external communication to and from the first device 102. For example, the first communication circuit 516 can permit the first device 102 to communicate with the second device 106 and the network 104.

The first communication circuit 516 can also function as a communication hub allowing the first device 102 to function as part of the network 104 and not limited to be an endpoint or terminal circuit to the network 104. The first communication circuit 516 can include active and passive components, such as microelectronics or an antenna, for interaction with the network 104.

The first communication circuit 516 can include a first communication interface 528. The first communication interface 528 can be used for communication between the first communication circuit 516 and other functional units or circuits in the first device 102. The first communication interface 528 can receive information from the second device 106 for distribution to the other functional units/circuits or can transmit information to the other functional units or circuits.

The first communication interface 528 can include different implementations depending on which functional units or circuits are being interfaced with the first communication circuit 516. The first communication interface 528 can be implemented with technologies and techniques similar to the implementation of the first control interface 522.

The first interface circuit 518 allows the user 112 of FIG. 1 to interface and interact with the first device 102. The first interface circuit 518 can include an input device and an output device. Examples of the input device of the first interface circuit 518 can include a keypad, a touchpad, soft-keys, a keyboard, a microphone, an infrared sensor for receiving remote signals, the user input 114, or any combination thereof to provide data and communication inputs. By way of an example, the user input 114 can connect to the first interface circuit 518 through a wired or wireless connection. The first interface circuit 518 can pass the input from the user input 114 to the first control circuit 512 for processing and storage.

The first interface circuit 518 can include a first display interface 530. The first display interface 530 can include an output device. The first display interface 530 can couple the user interface 212 including a projector, a video screen, a touch screen, a speaker, a microphone, a keyboard, and combinations thereof.

The first control circuit 512 can operate the first interface circuit 518 to display information generated by the navigation system 100 and receive input from the user 112. The first control circuit 512 can also execute the first software 526 for the other functions of the navigation system 100, including receiving location information from the first location circuit 520. The first control circuit 512 can further execute the first software 526 for interaction with the network 104 via the first communication circuit 516. The first control unit 512 can implement an index expansion module 531 and the map geometry module 533 for enhancing the accuracy of the navigation data and supporting the safety of the user 112.

The first control circuit 512 can operate the first interface circuit 518 to collect the user input 114. The first control circuit 512 can also receive location information from the first location circuit 520. The first control circuit 512 can operate the map management module 115 of FIG. 1 in order to deliver the requested information of the points-of-interest 303 of FIG. 3 for display on the user interface 212 and generate the control guidance instructions and maneuvering instructions to autonomously drive or assist in driving the first device 102.

The first location circuit 520 can be implemented in many ways. For example, the first location circuit 520 can function as at least a part of the global positioning system, an inertial navigation system, a cellular-tower location system, a gyroscope, or any combination thereof. Also, for example, the first location circuit 520 can utilize components such as an accelerometer, gyroscope, or global positioning system (GPS) receiver.

The first location circuit 520 can include a first location interface 532. The first location interface 532 can be used for communication between the first location circuit 520 and other functional units or circuits in the first device 102, including the first control circuit 512.

The first location interface 532 can receive information from the other functional units/circuits or from external sources, or can transmit information to the other functional units/circuits or to external destinations. The external sources and the external destinations refer to sources and destinations external to the first device 102.

The first location interface 532 can include different implementations depending on which functional units/circuits or external units/circuits are being interfaced with the first location circuit 520. The first location interface 532 can be implemented with technologies and techniques similar to the implementation of the first control circuit 512.

The map management module 115 of FIG. 1 can include the in-vehicle map database 529, an index expansion module 531, and a map geometry module 533. The map management module 115 can generate information about the selected point-of-interest 312 of FIG. 3. The in-vehicle map database 529 can be implemented by software, hardware, or a combination thereof capable of performing information look-up of additional information related to the street names, geometry, addresses, and information about the selected point-of-interest 312 identified by the user 112, the navigation system 100, or a combination thereof.

The first communication interface 528 can receive the map data update 121 from the second device 106 for distribution to the first storage circuit 514 and implementation of the in-vehicle map database 529. During update of the in-vehicle map database 529, the first communication interface 528 can transfer the input from the map data update 121 from the second device 106 to enhance the accuracy and reliability of the in-vehicle map database 529, the index expansion module 531, and the map geometry module 533.

The index expansion module 531 can be implemented with software, hardware, or a combination thereof capable of calculating or retrieving the latitude and longitude of a point-of-interest. For example, the index expansion module 531 can calculate the latitude and longitude of a point-of-interest. As an example, the index expansion module 531 is capable of mathematical manipulations of the latitude and longitude having an 18 byte total length.

The map geometry module 533 can be implanted in software, hardware, or a combination thereof capable of identifying additional information related to the point-of-interest identified by the index expansion module 531. As an example, the map geometry module 533 can access the in-vehicle map database 529 in order to display the information in the first device 102. The information retrieved by the map geometry module 533 can be stored in the first device 102 or the second device 106.

The second device 106 can be optimized for implementing an embodiment of the present invention in a multiple device embodiment with the first device 102. The second device 106 can provide the additional or higher performance processing power compared to the first device 102. The second device 106 can include a second control circuit 534, a second communication circuit 536, a second user interface 538, and a second storage circuit 546.

The second user interface 538 allows an operator (not shown) to interface and interact with the second device 106. The second user interface 538 can include an input device and an output device. Examples of the input device of the second user interface 538 can include a keypad, a touchpad, soft-keys, a keyboard, a microphone, or any combination thereof to provide data and communication inputs. Examples of the output device of the second user interface 538 can include a second display interface 540. The second display interface 540 can include a display, a projector, a video screen, a speaker, or any combination thereof.

As an example, the second device 106 can analyze a background map database 535 and generate refinements to the in-vehicle map database 529 for use by the first device 102. By way of an example, the second device 106 can provide the map data update 121 from the map activity manager 122 of FIG. 1. The map activity manager 122 can provide the map data update 121 to update the in-vehicle map database 529. The map activity manager 122 can include the background map database 535, an administrator center selector 537, and an address index module 539. The background map database 535 can be implemented as a memory database containing complete information for multiple of the region of interest 202 and can include a pictorial display of the roads, highways, and intersections for multiple of the region of interest 202. The admin center selector 537 can select the administrative center 308 of FIG. 3 of the region of interest 202 identified by the user 112 of FIG. 1 within the map activity manager 122.

The admin center selector 537 can utilize the administrative center 308 of the region of interest 202 of FIG. 2 to calculate the value of the first offset value 306 of FIG. 3 that identifies the first primary point-of-interest 304 of FIG. 3 of a street or road in the region of interest 202. The address index module 539 can generate the shifted address 318 of FIG. 3 for the latitude and longitude 307 of FIG. 3 as well as street addresses 320 of FIG. 3. In each case, the first primary point-of-interest 304 is defined relative to the administrative center 308 and the secondary points-of-interest 310 are shifted as the offset value 306 rather than the latitude and longitude 307 for each of the first primary point-of-interest 304 and the secondary points-of-interest 310 within the region of interest 202.

During the training process, the second control circuit 534 can generate the map data update 121 for distribution through the second communication circuit 536. The second control circuit 536 can verify the content of the map data update 121 does indeed represent changes to the points-of-interest 303 that were identified by the location of the first device 102. Once the map data update 121 has been verified, the second control circuit 534 can transfer the map data update 121 through the second storage circuit 546 to the background map database 535 for processing and further distribution.

The second control circuit 534 can execute a second software 542 to provide the intelligence of the second device 106 of the navigation system 100. The second software 542 can operate in conjunction with the first software 526. The second control circuit 534 can provide additional performance compared to the first control circuit 512.

The second control circuit 534 can operate the second user interface 538 to display information. The second control circuit 534 can also execute the second software 542 for the other functions of the navigation system 100, including operating the second communication circuit 536 to communicate with the first device 102 over the network 104.

The second control circuit 534 can be implemented in a number of different manners. For example, the second control circuit 534 can be a processor, an embedded processor, a microprocessor, hardware control logic, a hardware finite state machine (FSM), a digital signal processor (DSP), or a combination thereof.

The second control circuit 534 can include a second control interface 544. The second control interface 544 can be used for communication between the second control circuit 534 and other functional units or circuits in the second device 106. The second control circuit 534 can execute the admin center selector 537 in order to identify the administrative center 308 of FIG. 3 for the region of interest 202. The second control circuit 534 can also execute the address index module 539 for generating the first offset value 306 of FIG. 3 through the M* offset value 316 of FIG. 3 for inclusion in the map data update 121. The second control circuit 534 can maintain a list of the administrative center 308 for areas around the region of interest 202 of FIG. 2. The second control interface 544 can also be used for communication that is external to the second device 106.

The second control interface 544 can receive information from the other functional units/circuits or from external sources, or can transmit information to the other functional units/circuits or to external destinations. The external sources and the external destinations refer to sources and destinations external to the second device 106.

The second control interface 544 can be implemented in different ways and can include different implementations depending on which functional units/circuits or external units/circuits are being interfaced with the second control interface 544. For example, the second control interface 544 can be implemented with a pressure sensor, an inertial sensor, a microelectromechanical system (MEMS), optical circuitry, waveguides, wireless circuitry, wireline circuitry, or a combination thereof.

The second storage circuit 546 can store the second software 542. The second storage circuit 546 can also store the information such as data representing incoming images, data representing previously presented image, sound files, or a combination thereof. The second storage circuit 546 can be sized to provide the additional storage capacity to supplement the first storage circuit 514. The second storage circuit 546 can pass the map data update 121 to incorporate updates from the background map database 535, the admin center selector 537, and the address index module 539 sent in real-time to the first device 102.

For illustrative purposes, the second storage circuit 546 is shown as a single element, although it is understood that the second storage circuit 546 can be a distribution of storage elements. Also, for illustrative purposes, the navigation system 100 is shown with the second storage circuit 546 as a single hierarchy storage system, although it is understood that the navigation system 100 can include the second storage circuit 546 in a different configuration. For example, the second storage circuit 546 can be formed with different storage technologies forming a memory hierarchal system including different levels of caching, main memory, rotating media, or off-line storage.

The second storage circuit 546 can be a controller of a volatile memory, a nonvolatile memory, an internal memory, an external memory, or a combination thereof. For example, the second storage circuit 546 can be a controller of a nonvolatile storage such as non-volatile random-access memory (NVRAM), Flash memory, disk storage, or a volatile storage such as static random access memory (SRAM).

The second storage interface 548 can receive information from the other functional units/circuits or from external sources, or can transmit information to the other functional units/circuits or to external destinations. The external sources and the external destinations refer to sources and destinations external to the second device 106.

The second storage interface 548 can include different implementations depending on which functional units/circuits or external units/circuits are being interfaced with the second storage circuit 546. The second storage interface 548 can be implemented with technologies and techniques similar to the implementation of the second control interface 544. The second storage circuit 546 can receive real world updates for the background map database 535 in order to generate the map data update 121 sent to the map management module 115 in the first device 102.

The second communication circuit 536 can enable external communication to and from the second device 106. For example, the second communication circuit 536 can permit the second device 106 to communicate with the first device 102 over the network 104. By way of an example, the second device 106 can provide the map data update 121 to the first device 102.

The second communication circuit 536 can also function as a communication hub allowing the second device 106 to function as part of the network 104 and not limited to be an endpoint or terminal unit or circuit to the network 104. The second communication circuit 536 can include active and passive components, such as microelectronics or an antenna, for interaction with the network 104.

The second communication circuit 536 can include a second communication interface 550. The second communication interface 550 can be used for communication between the second communication circuit 536 and other functional units or circuits in the second device 106. The second communication interface 550 can receive information from the other functional units/circuits or can transmit information to the other functional units or circuits.

The second communication interface 550 can include different implementations depending on which functional units or circuits are being interfaced with the second communication circuit 536. The second communication interface 550 can be implemented with technologies and techniques similar to the implementation of the second control interface 544.

During the training process the first communication circuit 516 can couple with the network 104 to receive the map data update 121 from the second device 106 in the second device transmission 510. The second device 106 can receive information in the second communication circuit 536 from the first device transmission 508 of the network 104.

The second communication circuit 536 can couple with the network 104 to send information to the first device 102, including the updates for the in-vehicle map database 529 in the second device transmission 510. The first device 102 can receive information in the first communication circuit 516 from the second device transmission 510 of the network 104. The navigation system 100 can be executed by the first control circuit 512, the second control circuit 534, or a combination thereof. For illustrative purposes, the second device 106 is shown with the partition containing the second user interface 538, the second storage circuit 546, the second control circuit 534, and the second communication circuit 536, although it is understood that the second device 106 can include a different partition. For example, the second software 542 can be partitioned differently such that some or all of its function can be in the second control circuit 534 and the second communication circuit 536. Also, the second device 106 can include other functional units or circuits not shown in FIG. 5 for clarity.

The functional units or circuits in the first device 102 can work individually and independently of the other functional units or circuits. The first device 102 can work individually and independently from the second device 106 and the network 104.

The functional units or circuits in the second device 106 can work individually and independently of the other functional units or circuits. The second device 106 can work individually and independently from the first device 102 and the network 104.

The functional units or circuits described above can be implemented in hardware. For example, one or more of the functional units or circuits can be implemented using a gate array, an application specific integrated circuit (ASIC), circuitry, a processor, a computer, integrated circuit, integrated circuit cores, a pressure sensor, an inertial sensor, a microelectromechanical system (MEMS), a passive device, a physical non-transitory memory medium containing instructions for performing the software function, a portion therein, or a combination thereof.

For illustrative purposes, the navigation system 100 is described by operation of the first device 102 and the second device 106. It is understood that the first device 102 and the second device 106 can operate any of the modules and functions of the navigation system 100.

By way of a further example, the first device 102 can be the autonomous vehicle or the driver assisted vehicle. The first interface circuit 518 can receive input from the user input 114 of FIG. 1, for requesting the map data update 121. The map data update 121 can be generated by the second control circuit 534 from the background map database 535. The map data update 121 can be sent through the first communication circuit 516 and the network 104 to the first device 102 for processing by the first control circuit 512, while updating the in-vehicle map database 529.

It has been discovered that the second device 106 can generate the map data update 121 for the first device 102 that provides updates for the in-vehicle map database 529. As an example, the first control circuit 512 can verify the map data update 121 and execute the index expansion module 531 and the map geometry module 533 in order to update the in-vehicle map database 529.

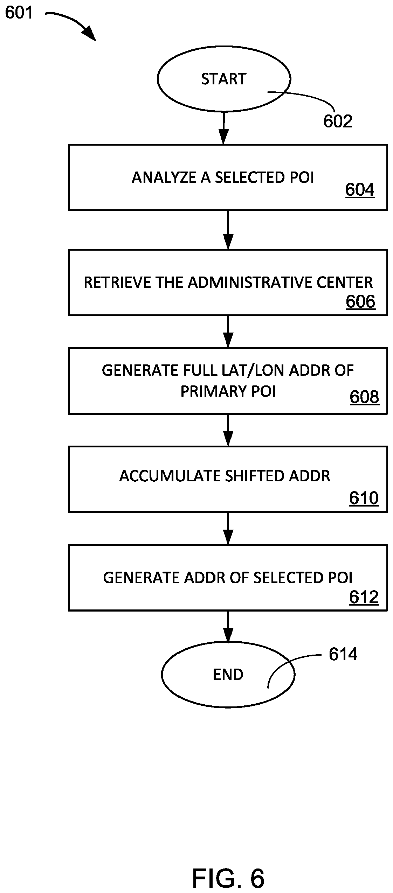

Referring now to FIG. 6, therein is shown an exemplary operational flow chart 601 of the navigation system 100 of FIG. 1 in an embodiment of the present invention. The exemplary operational flow chart 601 of the navigation system 100 depicts a start block 602 indicating that the first device 102 of FIG. 1 has accessed a region of interest 202 of FIG. 2.

The flow proceeds to an analyze selected point-of-interest (POI) block 604 in which the user input 114 of FIG. 1 of the first device 102 acknowledges a request for navigation to or information about the selected POI 312 of FIG. 3. The first control circuit 512 of FIG. 5 can identify that the region of interest 202 includes the selected POI 312. It is understood that selected POI 312 can be located outside the current location of the region of interest 202. If the selected POI is outside the current area of the region of interest 202, the first control circuit 512 would request a map data update 121 of FIG. 1 from the second device 106 that contains the selected POI 312 and updates for the in-vehicle map database 529 of FIG. 5.

The flow proceeds to a retrieve administrative center block 606, in which the first control circuit 512 would execute the map geometry module 533 in order to identify the full latitude/longitude address 307 of FIG. 3 of the administrative center 308 of FIG. 3 for the region of interest 202 that contains the selected POI 312. The full latitude/longitude address 307 of the administrative center 308 is an 18 byte value indicating the global position of the administrative center 308 in the region of interest 202 that contains the selected POI 312.

The flow proceeds to a generate full latitude/longitude address of primary point-of-interest block 608. Here, the first control circuit 512 can retrieve the offset value 306 of FIG. 3, from the in-vehicle map database 529, that identifies the primary point-of-interest (POI) 304 related to the selected POI 312. The first control circuit 512 can calculate the full latitude/longitude address 307 of the primary POI 304 by adding the offset value to the full latitude/longitude address 307 of the administrative center 308.

The flow then proceeds to an accumulate shifted address block 610. The first control circuit 512 can retrieve the shifted address 318 of FIG. 3 for each of the points-of-interest 303 of FIG. 3 between the primary POI 304 and the selected POI 312. By totaling the shifted address 318 for each of the points-of-interest 303 between the primary POI 304 and the selected POI 312, a total offset can be generated that indicates the shifted address 318 from the primary POI to the selected POI.

The flow then proceeds to a generate address of selected POI block 612. By totaling the shifted address 318 for each of the points-of-interest 303 between the primary POI 304 and the selected POI 312, then adding the result to the full latitude/longitude address 307 of the primary POI 304, the full latitude/longitude address 307 of the selected POI 312 can be generated. This process can reduce the memory utilization for the address index of the first storage circuit 514 of FIG. 5 by 39%. The additional space in the first storage circuit 514 can allow improvement of safety and services available to the first device 102.

The flow proceeds to an end 614, in which the navigation system 100 can generate the requested data for the selected POI 312 and present it on the user interface 212 of FIG. 2 of the first device 102. It is understood that the user interface 212 can show a planned route 213 of FIG. 2 from the current location of the first device 102 to the selected POI 312.

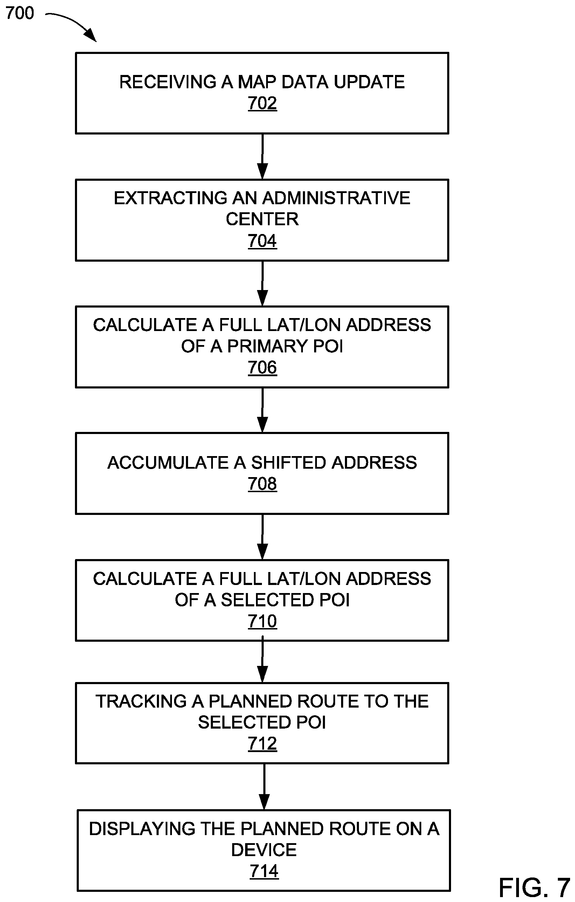

Referring now to FIG. 7, therein is shown a flow chart of a method 700 of operation of a navigation system 100 of FIG. 1 in an embodiment of the present invention. The method 700 includes: receiving a map data update including a selected point-of-interest in a block 702; extracting an administrative center from the map data update in a block 704; calculating a full latitude/longitude address of a primary point-of-interest by adding an offset value to the administrative center in a block 706; accumulating a shifted address for each of a point-of-interest between the primary point-of-interest and a selected point-of-interest in a block 708; calculating the full latitude/longitude address of the selected point-of-interest by combining a total of the shifted address for each of the points-of-interest between the primary point-of-interest and the selected point-of-interest in a block 710; tracking a planned route to the selected point-of-interest in a block 712; and displaying the planned route on a device in a block 714.

The resulting method, process, apparatus, device, product, and/or system is straightforward, cost-effective, uncomplicated, highly versatile, accurate, sensitive, and effective, and can be implemented by adapting known components for ready, efficient, and economical manufacturing, application, and utilization. Another important aspect of an embodiment of the present invention is that it valuably supports and services the historical trend of reducing costs, simplifying systems, and increasing performance.

These and other valuable aspects of an embodiment of the present invention consequently further the state of the technology to at least the next level.

While the invention has been described in conjunction with a specific best mode, it is to be understood that many alternatives, modifications, and variations will be apparent to those skilled in the art in light of the foregoing description. Accordingly, it is intended to embrace all such alternatives, modifications, and variations that fall within the scope of the included claims. All matters set forth herein or shown in the accompanying drawings are to be interpreted in an illustrative and non-limiting sense.

## Claims

1. A navigation system (100) comprising:
a control circuit (512) configured to:
receive a map data update (121) including a selected point-of-interest (312);
extract an administrative center (308) from the map data update (121);
calculate a full latitude/longitude address (307) of a primary point-of-interest (304) by adding an offset value (306) to the administrative center (308);
accumulate a shifted address (318) for each of a point-of-interest (303) between the primary point-of-interest (304) and a selected point-of-interest (312);
calculate the full latitude/longitude address (307) of the selected point-of-interest (312) by combining a total of the shifted address (318) for each of the points-of-interest (303) between the primary point-of-interest (304) and the selected point-of-interest (312);
track a planned route (213) to the selected point-of-interest (312); and
display the planned route (213) on a device (102).

2. The system (100) as claimed in claim 1 wherein the control circuit (512) is configured to extract the administrative center (308) includes retrieving the full latitude/longitude address (307) of the administrative center (308) as an 18 byte value.

3. The system (100) as claimed in claim 1 or 2, wherein the control circuit (512) is configured to retrieve the offset value (306) from the map data update (121), wherein retrieving the offset value (306) includes retrieving a four byte field identifying the location of the primary point-of-interest (304).

4. The system (100) as claimed in any of the preceding claims, wherein the control circuit (512) is configured to calculate a full latitude/longitude address (307) of a primary point-of-interest (304) includes adding the offset value (306) to the full latitude/longitude address (307) of the administrative center (308).

5. The system (100) as claimed in any of the preceding claims, wherein the control circuit (512) is configured to accumulate a shifted address (318) for each of a point-of-interest (303) includes the shifted address (318) is a binary number representing a difference in the full latitude/longitude address (307) from each of an adjacent one of the point-of-interest (303) or the primary point of interest (304).

6. The system (100) as claimed in any of the preceding claims, wherein the control circuit (512) is configured to calculate the full latitude/longitude address (307) of the selected point-of-interest (312) includes a total of the shifted address (318) from the primary point of interest (304) to the selected point-of-interest (312) added to the full latitude/longitude address (307) of the primary point of interest (304).

7. A method (700) of operation for a navigation system (100) comprising:
receiving a map data update (121) including a selected point-of-interest (312);
extracting an administrative center (308) from the map data update (121);
calculating a full latitude/longitude address (307) of a primary point-of-interest (304) by adding an offset value (306) to the administrative center (308);
accumulating a shifted address (318) for each of a point-of-interest (303) between the primary point-of-interest (304) and a selected point-of-interest (312);
calculating the full latitude/longitude address (307) of the selected point-of-interest (312) by combining a total of the shifted address (318) for each of the points-of-interest (303) between the primary point-of-interest (304) and the selected point-of-interest (312);
tracking a planned route (213) to the selected point-of-interest (312); and
displaying the planned route (213) on a device (102).

8. The method (700) as claimed in claim 7 wherein extracting an administrative center (308) includes retrieving the full latitude/longitude address (307) of the administrative center (308) as an 18 byte value.

9. The method (700) as claimed in claim 7 or 8, further comprising retrieving the offset value (306) from the map data update (121), wherein retrieving the offset value (306) from the map data update (121) includes retrieving a four byte field identifying the location of the primary point-of-interest (304).

10. The method (700) as claimed in any of the claims 7 to 9, wherein accumulating the shifted address (318) includes accumulating a binary number representing a difference in the full latitude/longitude address (307) from each of an adjacent one of the point-of-interest (303) or the primary point of interest (304).

11. A non-transitory computer readable medium including instructions for a navigation system (100) comprising:
receiving a map data update (121) including a selected point-of-interest (312);
extracting an administrative center (308) from the map data update (121);
calculating a full latitude/longitude address (307) of a primary point-of-interest (304) by adding an offset value (306) to the administrative center (308);
accumulating a shifted address (318) for each of a point-of-interest (303) between the primary point-of-interest (304) and a selected point-of-interest (312);
calculating the full latitude/longitude address (307) of the selected point-of-interest (312) by combining a total of the shifted address (318) for each of the points-of-interest (303) between the primary point-of-interest (304) and the selected point-of-interest (312);
tracking a planned route (213) to the selected point-of-interest (312); and
displaying the planned route (213) on a device (102).

12. The non-transitory computer readable medium including the instructions as claimed in claim 11 wherein extracting an administrative center (308) includes retrieving the full latitude/longitude address (307) of the administrative center (308) as an 18 byte value.

13. The non-transitory computer readable medium including the instructions as claimed in claim 11 or 12, and further including instructions for retrieving the offset value (306) from the map data update (121), wherein retrieving the offset value (306) from the map data update (121) includes retrieving a four byte field identifying the location of the primary point-of-interest (304).

14. The non-transitory computer readable medium including the instructions as claimed in any of the claims 11 to 13, wherein accumulating the shifted address (318) includes accumulating a binary number representing a difference in the full latitude/longitude address (307) from each of an adjacent one of the point-of-interest (303) or the primary point of interest (304).
